# FASCICULE DE BREVET EUROPEEN

(11) **EP 3 221 136 B1**
(45) Date de publication et mention de la délivrance du brevet: **02.01.2019**
(21) Numéro de dépôt: 15798046.7
(22) Date de dépôt: 19.11.2015
(51) Int. Cl.: B29D 30/06

(54) **DISPOSITIF ET PROCÉDÉ DE VULCANISATION DE PNEUMATIQUES**
REIFENVULKANISIER-VORRICHTUNG UND -VERFAHREN
APPARATUS AND METHOD FOR VULCANIZING TYRES

(30) Priorité: 19.11.2014 FR 1461186
(43) Date de publication de la demande: 27.09.2017
(73) Titulaire: Compagnie Générale des Etablissements Michelin, 63000 Clermont-Ferrand (FR)
(72) Inventeur: MASSOPTIER-DAVID, Michaël, F-63040 Clermont-ferrand Cedex9 (FR); GUERIN, Franck, F-63040 Clermont-ferrand Cedex 9 (FR); SIMONELLI, Thomas, F-63040 Clermont-ferrand Cedex 9 (FR)
(74) Mandataire: Noel, Luminita
(86) Numéro de dépôt international: PCT/EP2015/077125
(87) Numéro de publication internationale: WO 2016/079249

(56) Documents cités:
- EP-A2- 0 578 105
- WO-A1-2013/164282
- DE-A1-102012 108 803
- GB-A- 2 091 173
- US-A1- 2006 012 076
- US-A1- 2008 277 815
- US-B1- 6 474 968

## Description

L'invention est relative au domaine de la fabrication des pneumatiques et concerne plus particulièrement les dispositifs de vulcanisation des pneumatiques.

Traditionnellement, ces dispositifs sont formés d'une presse comprenant une cuve inférieure et une cuve supérieure, ou couvercle, qui ont pour fonction de contenir un moule de cuisson et de le maintenir en position fermée pendant la durée de la vulcanisation. En règle générale, le moule est relié à la presse par deux surfaces planes plus communément dénommées plateaux.

Le moule, spécifique à une dimension de pneumatique, est formé par l'ensemble des pièces destinées à être mises en contact avec le pneumatique à vulcaniser et comprend des coquilles, inférieure et supérieure, destinées à mouler la zone des flancs, des anneaux talons, inférieur et supérieur, destinés à mouler les bourrelets et la zone basse des flancs, ainsi qu'un ensemble de secteurs, portant l'empreinte de la bande de roulement et mobiles radialement sous l'action d'une couronne de serrage.

Les parois internes des pièces du moule définissent une enceinte de cuisson destinée à être mise en contact avec l'ébauche de pneumatique non vulcanisée. A l'intérieur du pneumatique un fluide caloporteur sous pression permet d'appliquer la pression et de plaquer l'ébauche contre les parois internes du moule ainsi que d'apporter l'énergie thermique nécessaire à la vulcanisation. Une partie de l'énergie thermique de vulcanisation peut également être apportée à l'ébauche de pneumatique par l'extérieur, via les coquilles et les secteurs.

En règle générale, une membrane de cuisson est installée dans la partie centrale de l'enceinte de cuisson, entre deux plateaux, inférieur et supérieur, et se déploie sous l'effet de la pression du fluide caloporteur, de manière à s'interposer entre ledit fluide caloporteur et la partie radialement interne du pneumatique. Le fluide caloporteur, en général de la vapeur ou de l'azote sous pression, circule dans le dispositif de vulcanisation entre une source d'approvisionnement et l'enceinte de cuisson.

Le fluide caloporteur est introduit à l'intérieur de l'enceinte soit en étant chauffé au préalable, soit en étant chauffé par des éléments chauffants placés à l'intérieur de l'enceinte de cuisson. On a toutefois constaté que, dans les deux cas, de par l'inertie thermique importante des pièces composant le moule et la presse, pour une température de consigne de cuisson donnée, les premières cuissons ne se font pas à la bonne température, ce qui engendre des défauts dans les pneumatiques.

Pour pallier à ce problème, une solution a été de fixer une température de consigne plus élevée lors des premières cuissons, puis de la faire diminuer par la suite. Il a toutefois été constaté qu'une telle solution ne convenait pas et ceci toujours à cause de l'inertie thermique élevée de l'ensemble de cuisson qui accumule de la chaleur et surcuit ensuite le pneu.

On connaît du document EP 0 686 492 une unité de chauffage et de brassage d'une charge de fluide caloporteur sous pression comportant une turbine actionnée par un moteur électrique et une résistance chauffante, ces éléments étant agencés dans l'enceinte de cuisson d'une presse de vulcanisation. Plus particulièrement, la turbine et son moteur électrique d'entraînement sont enfermés dans une enceinte étanche contenant le fluide caloporteur. Une résistance électrique baigne également dans le fluide caloporteur et on régule la température du fluide caloporteur en agissant sur le flux thermique dissipé par la résistance. Une solution pour remédier, à l'aide du dispositif décrit dans ce document, aux inconvénients liés à la mise à la bonne température de l'ensemble lors des premières cuissons, est d'ajuster la durée de cuisson en fonction du nombre de cuissons effectuées. Pour ceci, on met en place des correcteurs qui ajustent les paramètres de cuisson, notamment la température et la durée de cuisson sous pression en fonction du nombre de cuissons. Ainsi, dans un exemple de cuisson d'un pneumatique de véhicule de tourisme, pour une température des pièces moulantes d'environ 174°C lors de la première cuisson dont la température de consigne de cuisson est égale à 180°C, on établit une durée de cuisson sous pression égale à environ 14min, alors que, pour un même pneumatique, lorsque la température des pièces moulantes est stabilisée après plusieurs cuissons successives, et pour une même températures de consigne de cuisson, la durée sous pression est de 9,5min. Différentes valeurs de ces paramètres ont dû être établies pour des consignes intermédiaires et doivent être appliquées à chaque cuisson. De surcroît, les différentes valeurs établies pour les différents paramètres doivent être appliquées à chaque dimension de pneumatique.

On arrive ainsi, certes, à obtenir une bonne cuisson du pneumatique en appliquant ces correcteurs à chaque cycle de cuisson, mais au détriment de la productivité de la presse de vulcanisation et aussi pour un coût de manoeuvre plus élevé, vu les réglages qui sont à faire pour un nombre assez important de cycles de cuisson.

On connaît des documents US 2006/0012076, WO 2013/164282 et US 6474968 des solutions visant à réaliser un chauffage par différents éléments chauffants du moule et/ou du fluide de travail. Aucun de ces documents ne décrit de solution permettant une mise en température correcte du moule avant la cuisson.

L'invention a pour objectif de proposer un dispositif et un procédé de vulcanisation de pneumatique qui remédient à ces inconvénients.

A cet effet, l'invention propose un dispositif de vulcanisation pour pneumatique comme défini dans la revendication 1, comprenant un moule de vulcanisation comportant des parties moulantes définissant entre elles une enceinte de cuisson à l'intérieur de laquelle est agencée une unité de chauffage et de ventilation du fluide caloporteur, et coopérant avec une partie centrale de support et de mise en communication d'une arrivée de fluide caloporteur avec ladite enceinte de cuisson, caractérisé en ce que ladite partie centrale comprend des éléments chauffants qui sont réalisés de manière à être mis en fonctionnement avant la mise en fonctionnement de l'unité de chauffage et de ventilation du fluide caloporteur qui effectue la cuisson du pneumatique.

Selon l'invention, la partie centrale du moule qui sert de support et de mise en communication de l'enceinte de cuisson avec l'arrivée de fluide caloporteur dans l'enceinte comprend des éléments chauffants propres, autres que ceux utilisés pour le chauffage du fluide caloporteur de l'enceinte de cuisson. De plus, le dispositif comprend des moyens de commande qui réalisent la mise en fonctionnement des éléments chauffants de la partie centrale avant la mise en fonctionnement de l'unité de chauffage et de ventilation du fluide caloporteur en vue de la cuisson. On arrive ainsi à réaliser le chauffage de la partie centrale du moule de manière indépendante de celle de l'enceinte, on comprend à des valeurs de la température et à des moments différents par rapport au chauffage de l'enceinte de cuisson. Ceci permet de réaliser une mise en température et une stabilisation de la température du moule avant de démarrer la cuisson du pneumatique et sans à voir à chauffer au préalable le fluide caloporteur. On réalise ainsi un cycle de cuisson du pneu à des valeurs de température et temps optimisés pour un type de pneumatique donné et un gain en productivité de l'opération de vulcanisation, le moule étant toujours à la bonne température avant de démarrer le cycle de cuisson.

On limite ainsi les pertes des calories depuis l'enceinte de cuisson et obtient ainsi une cuisson du pneumatique aux bons paramètres de température et de durée de cuisson sous pression dès la première cuisson. Ceci permet de supprimer les différents correcteurs de valeurs des paramètres de cuisson qui tenaient compte du nombre de cuissons et de gagner ainsi en productivité et en coût de main d'oeuvre. De surcroît, on obtient un très bon rendement énergétique de la cuisson, ceci étant dû à la fois au chauffage électrique de l'enceinte de cuisson et à la limitation des pertes de chaleur dans la partie centrale du moule,
Des formes préférentielles de l'invention sont définies dans les revendications 2 à 10.

De préférence, le dispositif comprend une membrane de vulcanisation maintenue par ses talons sur des plateaux et ladite partie centrale comprend un boîtier agencé dans une ouverture d'un plateau.

Avantageusement, lesdits éléments chauffants sont des éléments chauffants électriques qui réchauffent par conduction le boîtier.

Dans une réalisation avantageuse de l'invention, lesdits éléments chauffants comprennent un anneau muni d'une résistance électrique chauffante qui est fixé sur la base du boîtier.

Dans une autre réalisation avantageuse de l'invention, lesdits éléments chauffants comprennent plusieurs cartouches chauffantes fixées sur la base du boîtier.

Dans une encore autre réalisation avantageuse de l'invention, lesdits éléments chauffants comprennent une nappe chauffante agencée sur la périphérie du boîtier.

Avantageusement, ladite partie centrale comporte une sonde de température reliée à des moyens de régulation de la puissance desdits éléments chauffants.

De préférence, ledit boîtier renferme l'unité de chauffage et de ventilation du fluide caloporteur à l'intérieur de l'enceinte de cuisson.

Avantageusement, ledit boîtier ferme de manière étanche l'enceinte de cuisson.

De préférence, les valeurs de consigne de température mesurées avec ladite sonde sont comprises entre 130 et 150°C.

Les buts de l'invention sont également atteints avec un procédé de vulcanisation d'un pneumatique comme défini dans la revendication 11, à l'aide d'un dispositif de vulcanisation selon l'une des revendications 1 à10, comportant un moule de vulcanisation comprenant des parties moulantes définissant entre elles une enceinte de cuisson à l'intérieur de laquelle est agencée une unité de chauffage et de ventilation du fluide caloporteur et coopérant avec une partie centrale de support et de mise en communication d'une arrivée de fluide caloporteur avec ladite enceinte de cuisson, caractérisé en ce qu'il comporte une étape de chauffage de ladite partie centrale réalisée de manière indépendante et avant celle de chauffage du fluide de l'enceinte de cuisson.

L'invention sera mieux comprise grâce à la suite de la description, qui s'appuie sur les figures suivantes :
- la figure 1a est une vue en coupe du dispositif de vulcanisation selon un premier exemple de réalisation de l'invention et la figure 1b une vue à échelle agrandie du détail B de la figure 1a;
- la figure 2 est une vue en coupe du dispositif de vulcanisation selon un deuxième exemple de réalisation de l'invention ;
- la figure 3 est une vue en coupe du dispositif de vulcanisation selon un troisième exemple de réalisation de l'invention.

Sur les différentes figures, les éléments identiques ou similaires portent la même référence. Leur description n'est donc pas systématiquement reprise.

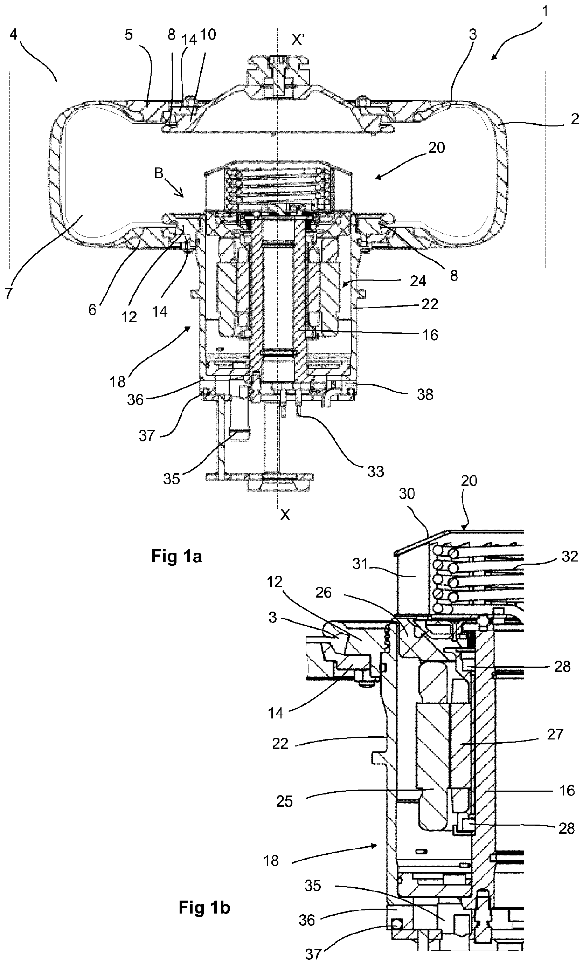

A la figure 1 on a représenté, par une vue en coupe axiale, un dispositif de vulcanisation 1 illustré lors d'une opération de vulcanisation d'un pneu 2. Dans l'exemple représenté aux figures, le dispositif de vulcanisation utilise une membrane 3 élastique de vulcanisation qui contient un fluide caloporteur pendant l'opération de vulcanisation du pneu. De préférence, le fluide caloporteur est un gaz neutre, comme par exemple l'azote. La membrane 3 définit avec des plateaux supérieur 10 et inférieur 11 une enceinte de cuisson 7. Elle est entourée par les parties moulantes rigides d'un moule 4, notamment les anneaux des talons 5, 6, les coquilles supérieure et inférieure, ainsi que l'ensemble des secteurs circonférentiels (non représentés sur les dessins). Le moule 4 ainsi formé, représenté schématiquement par des traits interrompus sur les figures, présente une symétrie de révolution autour d'un axe X-X'. En fonctionnement, on introduit une ébauche de pneumatique à l'intérieur du moule, on ferme le moule et on introduit un fluide caloporteur sous pression dans l'enceinte de cuisson, ce qui amène la membrane 3 à venir se plaquer sur la partie interne de l'ébauche.

La membrane 3 de vulcanisation est pourvue de talons 8 qui sont fixés sur les plateaux supérieur et inférieur 10,12 à l'aide des flasques 14. Le plateau inférieur 12 a une forme générale annulaire et permet le passage en son centre d'une tige coulissante de manoeuvre concentrique à l'axe X-X' (non représentée sur les dessins) qui passe à travers un fourreau 16 de protection. L'une des extrémités de la tige coulissante est fixée au plateau supérieur 10 et l'autre extrémité à un mécanisme d'entraînement en translation le long de l'axe X-X' afin de déplacer le plateau supérieur 10 et de permettre ainsi à la membrane 3 de se déployer et de se plier en fonctionnement.

Le plateau inférieur 12 supporte une partie centrale 18 du dispositif qui assure la mise en communication du fluide caloporteur avec l'enceinte de cuisson 7 ainsi que le support de conduit d'arrivée de fluide caloporteur. Une unité de chauffage et de ventilation 20 est agencée à l'intérieur de l'enceinte de cuisson 7. L'unité de chauffage et ventilation 20 comprend un élément chauffant représenté dans les figures par une résistance électrique 32 et une turbine 30 agencées de manière concentrique à l'axe X-X' à l'intérieur de l'enceinte de cuisson.

Dans les exemples représentés aux figures annexées, la partie centrale 18 forme un support pour l'une unité de chauffage et ventilation 20 du fluide caloporteur. La partie centrale 18 est définie au niveau du passage central dans le plateau 12, ledit passage étant fermé par un boîtier 22 qui s'étend d'un côté opposé de l'enceinte de cuisson 7. Le boîtier 22 est fixé sur le plateau 12 par exemple par une fixation à vis. Le boîtier 22 renferme un moteur électrique 24 dont le stator 25 est fixé au boîtier 22 via un flasque 26 et le rotor 27 est monté sur un tube 28, lui-même monté sur des roulements 28 calés sur le fourreau 16. Le tube 28 entraîne en rotation la turbine 30 formée par des aubes 31 autour de l'axe X-X'. La turbine 30 est agencée autour de la résistance électrique 32. La résistance électrique 32 est supportée par le flasque 26 et est alimentée en énergie au niveau de ses plots de connexion 33. Le boîtier 22 est en un matériau métallique conducteur, par exemple de l'aluminium et a de préférence une forme de révolution d'axe X-X'.

Le fluide caloporteur est introduit sous pression à l'intérieur de l'enceinte de cuisson 7 en début de cycle de cuisson et est extrait de celle-ci en fin de cycle via un conduit 35 muni d'un clapet auto-obturant, le conduit étant supporté à l'une de ses extrémités par la base du boîtier 22. De manière similaire au dispositif décrit dans le document EP 0 686 492, l'enceinte de cuisson 7 forme avec le boîtier 22 et la tige de manoeuvre du plateau 10 une enceinte étanche à l'intérieur de laquelle circule le fluide caloporteur, des joints d'étanchéité étant prévus à cet effet entre les différents composants de la partie centrale 18.

Comme dans le document susmentionné, le fluide caloporteur est introduit à température ambiante et sous pression dans l'enceinte de cuisson 7 et est ensuite mis en circulation par la turbine 30 en étant chauffé par la résistance électrique 32. Sous l'action de la turbine 30, le fluide caloporteur est aspiré au niveau de la partie centrale de la turbine, traverse les spires de la résistance électrique 32, puis il est éjecté dans la partie basse de l'enceinte de cuisson 7 et vient lécher les parois de la membrane 3, les échanges thermiques avec l'intérieur de l'ébauche de pneumatique s'opérant au travers de la membrane. De manière connue, le pneumatique est chauffé également par l'extérieur en dotant les parties moulantes du moule d'éléments chauffants électriques. De manière connue également le moule est isolé thermiquement du milieu ambiant, notamment en disposant des couches d'isolant thermique entre le moule et les plateaux supérieur et inférieur de la presse, ainsi qu'en entourant d'un tapis thermiquement isolant la surface externe cylindrique du moule.

Selon l'invention, la partie centrale 18 comporte ses propres éléments de chauffage qui sont alimentés avant d'alimenter l'unité de chauffage et de ventilation 20 en vue de la cuisson. Plus particulièrement dans l'exemple de réalisation des figures 1a et 1b, un anneau 36 métallique est fixé sur la base du boîtier 22, à l'extérieur de celui-ci, et renferme une résistance électrique 37. L'anneau 36 est avantageusement un anneau en aluminium et la résistance électrique 37 est une résistance blindée placée à l'intérieur de l'anneau 36. Lorsqu'elle est alimentée, la résistance électrique 37 chauffe par conduction le boîtier 22.

En effet, le boîtier 22 passe à travers le plateau 12 du moule et aussi au plateau (non illustré) de la presse de cuisson de réception du moule 4. De ce fait, il constitue un puits de chaleur à travers lequel passent les calories du moule et dont l'influence néfaste est ressentie surtout en début de cuisson. Ainsi, en chauffant le boîtier 22 et donc la partie centrale 18 du moule avant la cuisson, on obtient une mise à la bonne température et une stabilisation de la température du moule avant de démarrer la cuisson du pneumatique.

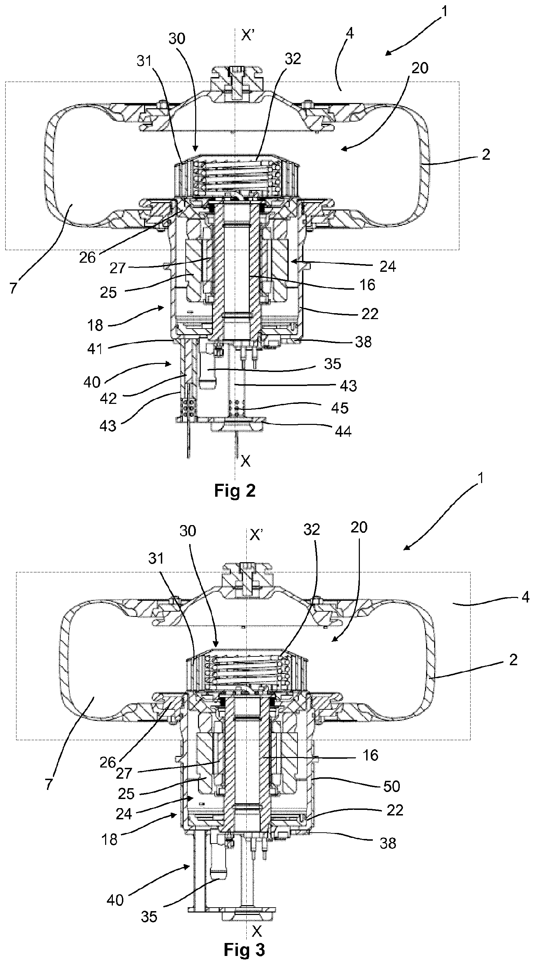

Dans l'exemple de réalisation de la figure 2, une pièce support 40 coaxiale à l'axe X-X' porte plusieurs cartouches chauffantes 42 cylindriques agencées avec leur axe longitudinal parallèlement à l'axe X-X'. La pièce de support 40 comporte un anneau 41 fixé sur la base du boîtier 22 de manière concentrique à l'axe X-X', des colonnes 43 qui relient l'anneau 41 et une base 43, parallèle à l'anneau 43. L'axe longitudinal de chaque colonne 43 est parallèle à l'axe X-X' et chaque colonne renferme une cartouche chauffante 42, par exemple une résistance électrique blindée. La base de chaque colonne 43 est munie d'orifices 45 pour le refroidissement de la base 43 de la pièce support 40.

Dans l'exemple illustré à la figure 3, le boîtier 22 est chauffé par conduction à l'aide d'une nappe chauffante 50 électrique disposée à la périphérie du boîtier 22 sur la surface latérale de celui-ci. La nappe chauffante 50 s'étend à partir de la base du boîtier 22 sur une hauteur égale à environ 2/3 de son hauteur. La membrane 3 n'a pas été représentée sur les figures 2 et 3, mais on comprend qu'elle est maintenue sur les plateaux 10, 12 à l'aide des flasques, comme dans l'exemple des figures 1a et 1b.

Une sonde de température 38 montée sur l'anneau 36, respectivement sur l'anneau 41 envoie les valeurs mesurées de la température de l'anneau 36, 41 à une unité de contrôle (non représentée sur les dessins) qui commande l'alimentation de la résistance électrique blindée 37, respectivement des cartouches chauffantes 42 ou de la nappe chauffante 50.

L'unité de contrôle permet ainsi de commander la mise en marche et l'arrêt de l'alimentation des éléments chauffants 37, 42, 50 du boîtier 22 en fonction des informations reçues de la sonde de température 38. Lorsque les données de la sonde 38 indiquent que la température de consigne est atteinte, l'alimentation des éléments chauffants est arrêtée et la cuisson peut démarrer. Dans une variante, on maintient l'alimentation des éléments chauffants 37, 42, 50 pendant la cuisson, tout en régulant leur alimentation en fonction de la température de consigne.

Dans une autre variante, on isole à l'aide d'une couche d'isolant thermique la surface extérieure du boîtier 22.

En fonctionnement, l'unité de contrôle commande le chauffage de l'anneau 36, 41 à une température de consignée préétablie comprise entre 130 et 150°C, selon le type de pneumatique à vulcaniser. Dès la température de consigne atteinte, l'unité de contrôle informe l'unité centrale de commande du dispositif de vulcanisation que le cycle de vulcanisation peut commencer. L'ébauche de pneumatique étant chargée dans le dispositif de vulcanisation et le fluide caloporteur sous pression étant présent dans l'enceinte de cuisson, l'unité centrale commande la mise en circulation de celui-ci par la rotation de la turbine 30 et son chauffage par la résistance électrique 32 à une température de consigné préétablie et pendant une durée de cuisson sous pression donnée, ces paramètres étant établis en fonction du type de pneumatique à vulcaniser. Ainsi, pour un pneumatique de véhicule de tourisme on établit une température de consigne lors de la cuisson de 180°C et une durée de cuisson sous pression de 9,5min, ces paramètres étant maintenus constants lors de toutes les cuissons effectuées avec le dispositif de vulcanisation de l'invention. Ceci est dû au fait que la partie centrale du moule est à la bonne température dès le départ et n'agit plus comme un puits de chaleur par lequel s'écoulent les calories en provenance de l'enceinte de cuisson 7. On arrive ainsi à assurer une cuisson dans les paramètres optimums préétablis dès le départ et lors de toutes les cuissons effectuées avec le dispositif de vulcanisation de l'invention, ce qui permet de gagner en productivité, le chauffage de la partie centrale pouvant être fait en temps masqué (par exemple pendant le chargement du pneumatique dans le moule).

Les formes d'exécution décrites ci-dessus ne sont bien sûr pas limitatives et l'homme du métier pourra envisager d'autres moyens équivalents permettant de chauffer de manière indépendante la partie centrale du dispositif de vulcanisation. Ainsi, un élément chauffant électrique cylindrique sous forme d'un film chauffant électrique peut être agencé sur la surface latérale cylindrique, à l'extérieur et/ou à l'intérieur du boîtier 22. L'utilisation d'autres moyens de chauffage électrique, tels que des moyens de chauffage par induction peut également être envisagée, le boîtier 22 étant alors réalisé en un matériau ferromagnétique.

## Revendications

1. Dispositif (1) de vulcanisation pour pneumatique comprenant
- un moule (4) de vulcanisation comportant des parties moulantes définissant entre elles une enceinte de cuisson (7) à l'intérieur de laquelle est agencée une unité de chauffage et de ventilation (20) du fluide caloporteur et coopérant avec
- une partie centrale (18) de support et de mise en communication d'une arrivée de fluide caloporteur avec ladite enceinte de cuisson (7),
**caractérisé en ce que** ladite partie centrale (18) comprend des éléments chauffants (37, 42, 50) qui sont réalisés de manière à être mis en fonctionnement avant la mise en fonctionnement de l'unité de chauffage et de ventilation (20) du fluide caloporteur qui effectue la cuisson du pneumatique.

2. Dispositif selon la revendication 1, **caractérisé en ce qu'**il comprend une membrane (3) de vulcanisation maintenue par ses talons (8) sur des plateaux (10, 12) et **en ce que** ladite partie centrale (18) comprend un boîtier (22) agencé dans une ouverture d'un plateau (12).

3. Dispositif selon la revendication 2, **caractérisé en ce que** lesdits éléments chauffants (37, 42, 50) sont des éléments chauffants électriques qui réchauffent par conduction le boîtier (22).

4. Dispositif selon l'une des revendications 2 ou 3, **caractérisé en ce que** lesdits éléments chauffants comprennent un anneau (36) muni d'une résistance électrique chauffante (37) qui est fixé sur la base du boîtier (22).

5. Dispositif selon l'une des revendications 2 ou 3, **caractérisé en ce que** lesdits éléments chauffants comprennent plusieurs cartouches chauffantes (42) fixées sur la base du boîtier (22).

6. Dispositif selon l'une des revendications 2 ou 3, **caractérisé en ce que** lesdits éléments chauffants comprennent une nappe chauffante (50) agencée sur périphérie du boîtier (22).

7. Dispositif selon l'une des revendications précédentes, **caractérisé en ce que** ladite partie centrale (18) comporte une sonde de température (38) reliée à des moyens de régulation de la puissance desdits éléments chauffants (37, 42, 50).

8. Dispositif selon l'une des revendications 2 à 7, **caractérisé en ce que** ledit boîtier (22) renferme l'unité de chauffage et de ventilation (20).

9. Dispositif selon la revendication précédente, **caractérisé en ce que** ledit boîtier (22) ferme de manière étanche l'enceinte de cuisson (7).

10. Dispositif selon l'une des revendications 7 à 9, **caractérisé en ce que** les valeurs de consigne de température mesurées avec ladite sonde (38) sont comprises entre 130 et 150°C.

11. Procédé de vulcanisation d'un pneumatique à l'aide d'un dispositif de vulcanisation selon l'une des revendications 1 à 10, comportant moule (4) de vulcanisation comprenant des parties moulantes définissant entre elles une enceinte de cuisson (7) à l'intérieur de laquelle est agencée une unité de chauffage et de ventilation (20) du fluide caloporteur et coopérant avec une partie centrale (18) de support et de mise en communication d'une arrivée de fluide caloporteur avec ladite enceinte de cuisson (7), **caractérisé en ce qu'**il comporte une étape de chauffage de ladite partie centrale (18) réalisée de manière indépendante et avant celle de chauffage du fluide de l'enceinte de cuisson (7).

## Patentansprüche

1. Vorrichtung (1) zur Vulkanisierung für Reifen, welche umfasst:
- eine Vulkanisierform (4), welche formgebende Abschnitte aufweist, die zwischen sich eine Vulkanisierkammer (7) definieren, in deren Innerem eine Heiz- und Belüftungseinheit (20) für das Wärmeträgermedium angeordnet ist, und die zusammenwirken mit
- einem mittleren Abschnitt (18) zur Abstützung und Herstellung einer Verbindung einer Zuleitung des Wärmeträgermediums mit der Vulkanisierkammer (7),
**dadurch gekennzeichnet, dass** der mittlere Abschnitt (18) Heizelemente (37, 42, 50) umfasst, welche dafür ausgelegt sind, vor der Inbetriebnahme der Heiz- und Belüftungseinheit (20) für das Wärmeträgermedium, welches das Vulkanisieren des Reifens bewirkt, in Betrieb genommen zu werden.

2. Vorrichtung nach Anspruch 1, **dadurch gekennzeichnet, dass** sie eine Vulkanisiermembran (3) umfasst, die von ihren Wülsten (8) auf den Platten (10, 12) gehalten wird, und dadurch, dass der mittlere Abschnitt (18) ein Gehäuse (22) umfasst, das in einer Öffnung einer Platte (12) angebracht ist.

3. Vorrichtung nach Anspruch 2, **dadurch gekennzeichnet, dass** die Heizelemente (37, 42, 50) elektrische Heizelemente sind, welche das Gehäuse (22) durch Leitung erwärmen.

4. Vorrichtung nach einem der Ansprüche 2 oder 3, **dadurch gekennzeichnet, dass** die Heizelemente einen Ring (36) umfassen, der mit einem elektrischen Heizwiderstand (37) ausgestattet ist, welcher an der Unterseite des Gehäuses (22) befestigt ist.

5. Vorrichtung nach einem der Ansprüche 2 oder 3, **dadurch gekennzeichnet, dass** die Heizelemente mehrere Heizpatronen (42) umfassen, die an der Unterseite des Gehäuses (22) befestigt sind.

6. Vorrichtung nach einem der Ansprüche 2 oder 3, **dadurch gekennzeichnet, dass** die Heizelemente eine Heizmatte (50) umfasst, die am Rand des Gehäuses (22) angeordnet ist.

7. Vorrichtung nach einem der vorhergehenden Ansprüche, **dadurch gekennzeichnet, dass** der mittlere Abschnitt (18) einen Temperatursensor (38) aufweist, der mit Mitteln zur Regelung der Leistung der Heizelemente (37, 42, 50) verbunden ist.

8. Vorrichtung nach einem der Ansprüche 2 bis 7, **dadurch gekennzeichnet, dass** das Gehäuse (22) die Heiz- und Belüftungseinheit (20) enthält.

9. Vorrichtung nach dem vorhergehenden Anspruch, **dadurch gekennzeichnet, dass** das Gehäuse (22) die Vulkanisierkammer (7) dicht verschließt.

10. Vorrichtung nach einem der Ansprüche 7 bis 9, **dadurch gekennzeichnet, dass** die Temperatursollwerte, die mit dem Sensor (38) gemessen werden, zwischen 130 und 150 °C liegen.

11. Verfahren zur Vulkanisierung eines Reifens mithilfe einer Vorrichtung zur Vulkanisierung nach einem der Ansprüche 1 bis 10, welche eine Vulkanisierform (4) aufweist, die formgebende Abschnitte umfasst, die zwischen sich eine Vulkanisierkammer (7) definieren, in deren Innerem eine Heiz- und Belüftungseinheit (20) für das Wärmeträgermedium angeordnet ist, und die mit einem mittleren Abschnitt (18) zur Abstützung und Herstellung einer Verbindung einer Zuleitung des Wärmeträgermediums mit der Vulkanisierkammer (7) zusammenwirken, **dadurch gekennzeichnet, dass** es einen Schritt der Erwärmung des mittleren Abschnitts (18) umfasst, der unabhängig von und vor dem Schritt der Erwärmung des Fluids der Vulkanisierkammer (7) durchgeführt wird.

## Claims

1. Tyre vulcanizing device (1) comprising
- a vulcanizing mould (4) comprising moulding parts between them defining a curing chamber (7) inside which there is arranged a heating and ventilation unit (20) for the heat-transfer fluid, and collaborating with
- a central part (18) providing support to a heat-transfer fluid inlet and establishing communication between the heat-transfer fluid inlet and the said curing chamber (7),
**characterized in that** the said central part (18) comprises heating elements (37, 42, 50) which are produced in such a way as to be brought into operation before the heating and ventilation unit (20) for the heat-transfer fluid that cures the tyre is brought into operation.

2. Device according to Claim 1, **characterized in that** it comprises a vulcanizing bladder (3) held by its beads (8) on platens (10, 12) and **in that** the said central part (18) comprises a casing (22) arranged in an opening of a platen (12).

3. Device according to Claim 2, **characterized in that** the said heating elements (37, 42, 50) are electrical heating elements which heat the casing (22) by conduction.

4. Device according to one of Claims 2 and 3, **characterized in that** the said heating elements comprise a ring (36) fitted with a resistive electrical heating element (37) which is fixed on the base of the casing (22).

5. Device according to one of Claims 2 and 3, **characterized in that** the said heating elements comprise several heating cartridges (42) fixed to the base of the casing (22).

6. Device according to one of Claims 2 and 3, **characterized in that** the said heating elements comprise a heating sheet (50) arranged on the periphery of the casing (22).

7. Device according to one of the preceding claims, **characterized in that** the said central part (18) comprises a temperature probe (38) connected to means of regulating the power of the said heating elements (37, 42, 50).

8. Device according to one of Claims 2 to 7, **characterized in that** the said casing (22) encloses the heating and ventilation unit (20).

9. Device according to the preceding claim, **characterized in that** the said casing (22) closes the curing chamber (7) in fluidtight manner.

10. Device according to one of Claims 7 to 9, **characterized in that** the set point temperature values measured with the said probe (38) are comprised between 130 and 150°C.

11. Method for vulcanizing a tyre using a vulcanizing device according to one of Claims 1 to 10, comprising a vulcanizing mould (4) comprising moulding parts between them defining a curing chamber (7) inside which there is arranged a heating and ventilation unit (20) for the heat-transfer fluid, and collaborating with a central part (18) providing support to a heat-transfer and establishing communication between the heat-transfer fluid inlet and the said curing chamber (7), **characterized in that** it comprises a step of heating the said central part (18) which step is performed independently of and before that of heating the fluid of the curing chamber (7).
